# EUROPEAN PATENT SPECIFICATION

(11) **EP 1 713 220 B1**
(45) Date of publication and mention of the grant of the patent: **07.05.2008**
(21) Application number: 06117423.1
(22) Date of filing: 14.08.2002
(51) Int. Cl.: H04L 12/58, H04Q 7/22

(54) **Method and apparatus for pushing e-mail to wireless communication devices**
Verfahren und Vorrichtung zum Schieben elektronischer Post auf drahtlose Kommunikationsendgeräte
Procédé et dispositif pour pousser des courriels vers des dispositifs de communication sans fil

(43) Date of publication of application: 18.10.2006
(62) Divisional of application: 02754036.8
(73) Proprietor: Research In Motion Limited, Waterloo, Ontario N2L 3W8 (CA)
(72) Inventor: Gilhuly, Barry J., Waterloo, Ontario, N2K 3P8 (CA); Van, Ngoc Anh, Brantford, Ontario N3R 5J7 (CA); Parry, Thomas, Cambridge, Ontario N1T 1H1 (CA)
(74) Representative: Hibbert, Juliet Jane Grace

(56) References cited:
- WO-A-01/22669
- DE-U1- 20 009 110

## Description

### BACKGROUND OF THE INVENTION

### Field of the Invention

The present invention relates generally to systems for "pushing" e-mail information to a plurality of wireless communication devices, and more particularly relates to an e-mail managing client which is configured to Iogon to a plurality of e-mail servers on behalf of a plurality of unaffiliated e-mail accounts for establishing and maintaining a single session connection with each e-mail server to receive e-mail change notification information for the accounts so that it may manage, retrieve, and push e-mail information to the plurality of wireless communication devices substantially in real time.

### Description of the Related Art

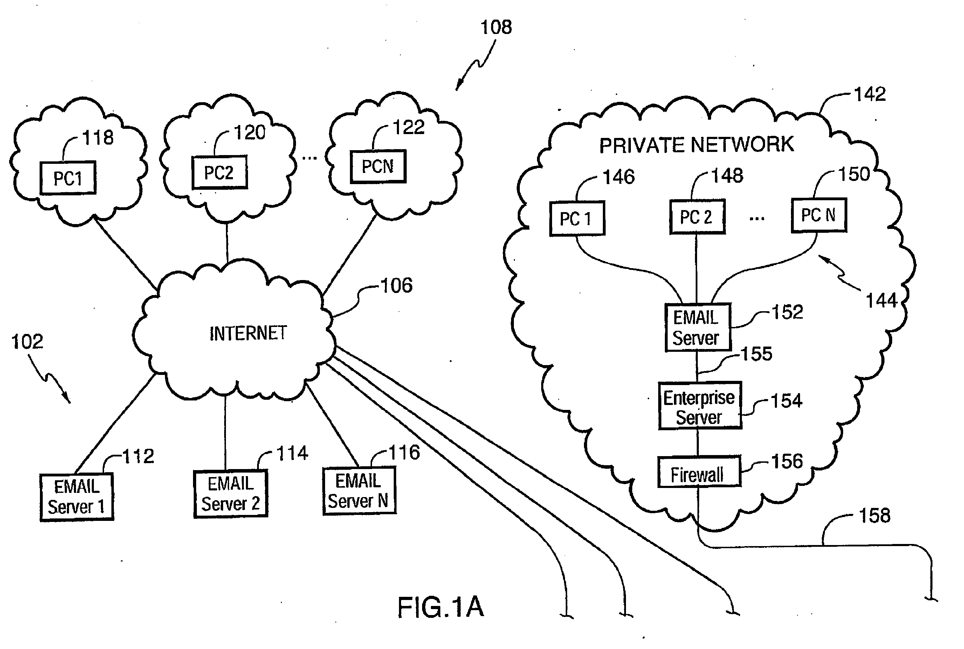

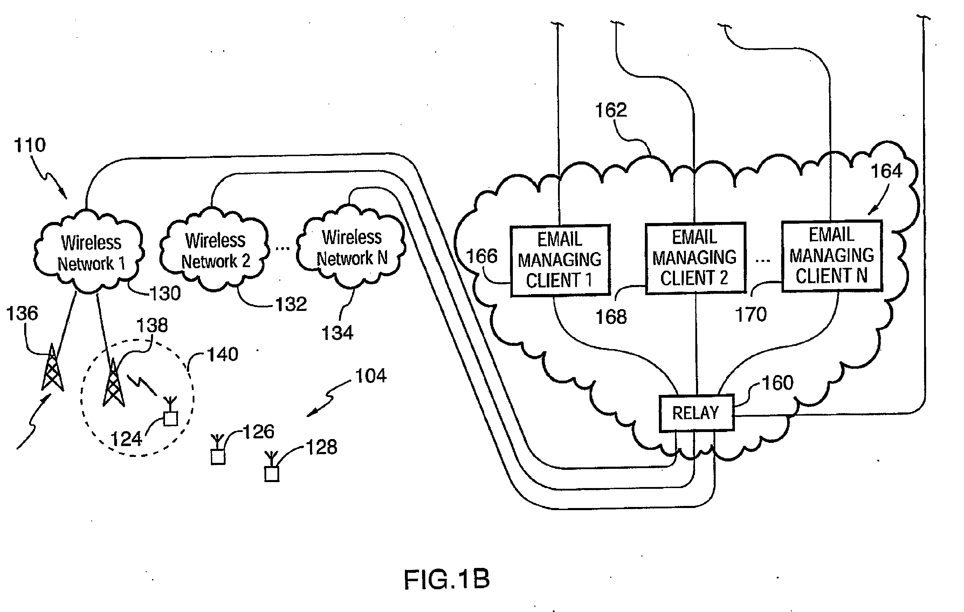

FIG. 1 is an illustration a system 100 in which e-mail information is pushed, in a conventional fashion, from an e-mail server 152 to a plurality of wireless communication devices 104. A private network 142, which may be a private local area network (LAN), includes e-mail server 152 as well as a plurality of computers 144, an enterprise server 154, and a firewall 156. Each end-user of computer 144 in private network 142 has an e-mail account managed by e-mail server 152 which operates in accordance with the well-known Post Office Protocol (POP) standard. Thus, the plurality of computers 144 may be used to connect to and access private e-mail messages from e-mail server 152 as is conventional. As apparent, all computers 144 operate within the same private network 142 that is governed and/or managed by the same single entity (e.g. the same company) and in that regard they are affiliated. There are only three (3) computers 144 shown in the figure for simplicity, namely, computers 146,148, and 150 which are labeled as PC1, PC2, ..., through PCn, respectively.

Each computer 144 and/or its corresponding e-mail account is associated with a respective one of the wireless communication devices 104. Each wireless communication device 104 is portable and includes a hand-held housing with a display and a keyboard/keypad (e.g. miniature QWERTY-type keyboard), as well as a wireless transceiver, an antenna, and one or more processors which control the operation of the device. Each device 104 has the ability to send and receive e-mail information associated with the e-mail account managed by e-mail server 152. The e-mail information is received by each device 104 via a real-time automatic "push" methodology, in contrast to any method requiring devices 104 to invoke a connection for the receipt of e-mail information.

Enterprise server 154 facilitates the pushing of e-mail information from e-mail server 152 to the wireless communication devices 104. During system setup, a virtual private network (VPN) connection is established and maintained over a leased line 158 between enterprise server 154 and a relay 160. In addition, a single proprietary connection 155 is established and maintained between enterprise server 154 and e-mail server 152. For example, proprietary connection 155 may be a MAPI (Messaging Application Programming Interface) connection associated with Microsoft Exchange. When a new e-mail account is setup within private network 142, enterprise server 154 is supplied with the server address of e-mail server 152 (or another server) for association with the new account.

When changes to any of the e-mail accounts are detected at e-mail server 152 (e.g., new e-mail received, messages moved from one folder to another, etc.), e-mail server 152 sends e-mail change notification information in real time to enterprise server 154 over proprietary connection 155. The e-mail change notification information includes a notification identifier which uniquely identifies the e-mail change. When enterprise server 154 receives notification information for a particular account, it requests to receive e-mail information corresponding to the notification identifier by sending a message to the stored server address for the e-mail account. After enterprise server 154 receives the e-mail information, it pushes it to the appropriate wireless communication device through relay 160 and the wireless network currently serving the device. Although this conventional operation is described in relation to a single private network 142, the pushing of e-mail information is performed for multiple private networks simultaneously using the same relay 160. Such operation is described more particularly in WO 01/22669 A1: "System and Method for Pushing Information from a Host System to a Mobile Data Communication Device", published on 29 March 2001 and assigned to the current assignee of the present application.

The system described above operates efficiently and is suitable for handling affiliated e-mail accounts in a private network. However, Internet-based e-mail is moving to support what is known as the Internet Message Access Protocol (IMAP) standard for e-mail and message storage. IMAP was designed to replace the older POP method for mail access. IMAP's main strength is its ability to support multiple simultaneous accesses from many clients to one or more mailboxes. This allows more than one user or computer to access the same information without fear of failure or damage to the information storage area.

For wireless handheld mobile devices, pushing information in real time to notify a mobile device that mail has been received is a key feature. However, conventional IMAP was not designed to facilitate push-based message services for a large number of end-users in an efficient and scalable way. IMAP was designed similar to POP in that it focuses on a polling or connection-based solution such that clients need to connect to read their mail. E-mail notifications can be automatically delivered in real time using IMAP, but a single TCP/IP connection must be established and maintained for each e-mail account/mailbox in order to do so. Such known limitations make IMAP unable to scale well to support a large number of mobile device users. Polling for new data and/or changes is one option, but this mechanism fails as the number of users becomes high (e.g. in the thousands or hundreds of thousands). The number of physical IMAP servers to support such polling and connection demands would ultimately make the solution unmanageable for any operations center.

Accordingly, what is needed is a scalable and efficient system for pushing e-mail information from one or more e-mail servers to a plurality of wireless communication devices.

Patent DE-U-200 90 110 describes a system where e-mail information is sent to wireless devices. A connection is established to an e-mail server, e-mail information is received and the information is pushed to the wireless device.

### SUMMARY OF THE INVENTION

The invention relates to a method according to claim 1, a computer program product according to claim 9 and a system according to claim 10. Preferred embodiments are set forth in dependent claims.

A system in which e-mail information is "pushed" from a plurality of e-mail servers to a plurality of wireless communication devices is described herein. Each e-mail server is publicly accessible and manages a plurality of unaffiliated e-mail accounts respectively associated with the plurality of wireless communication devices. An e-mail managing client logs on to an e-mail server on behalf of the plurality of unaffiliated e-mail accounts and a TCP/IP connection is established and maintained therewith. Thereafter, e-mail change notification information for the plurality of unaffiliated e-mail accounts are received continually over the single TCP/IP connection. Based on the e-mail change notification information, e-mail information may be retrieved and pushed by the e-mail managing client for real time receipt by the plurality of wireless communication devices.

An e-mail server identifier and an e-mail notification identifier are provided with each e-mail change message so that requests to receive particular e-mail information can be properly facilitated. User-configurable delivery settings are also advantageously provided so that e-mail information may be pushed (if at all) as specified by the end-user.

Thus, a scalable and efficient system for pushing e-mail information from one or more e-mail servers to a plurality of wireless communication devices is advantageously provided.

### BRIEF DESCRIPTION OF THE DRAWINGS

FIG. 1 is an illustration of a system in which e-mail information is pushed from a plurality of e-mail servers to a plurality of wireless communication devices;
FIG.2 is an illustration of a relevant portion of the system of FIG. 1 for describing details regarding the invention;
FIG. 3 is an illustration of general representative information associated with some of a plurality of unaffiliated e-mail accounts managed by each e-mail server; and
FIGs. 4A-4C form a flowchart which describes a method of pushing e-mail information from the plurality of e-mail servers to the plurality of wireless communication devices.

### DETAILED DESCRIPTION OF THE PREFERRED EMBODIMENTS

FIG. 1 is an illustration of a novel system 100 in which e-mail information is pushed from a plurality of e-mail servers 102 to a plurality of wireless communication devices 104. System 100 also includes private network 142 of the prior art as described in the Background of the Invention. E-mail servers 102 are coupled to a public network 106 such as the Internet. A plurality of computing devices 108 are also coupled to public network 106 for connecting to and accessing one of e-mail servers 102. An end-user of each computing device 108 has an e-mail account on one of e-mail servers 102 which stores and manages e-mail for the respective computing device.

Each computer device 108 and/or its corresponding e-mail account is associated with a respective one of the wireless communication devices 104 to which e-mail information is pushed. Each wireless communication device 104 is portable and includes a hand-held housing with a display and a keyboard/keypad (e.g. miniature QWERTY-type keyboard), as well as a wireless transceiver, an antenna, and one or more processors which control the operation of the device. Each device 104 has the ability to send and receive e-mail information associated with its e-mail account managed by one of e-mail servers 102. The e-mail information is received by each device 104 via a real-time automatic "push" methodology, in contrast to any method requiring devices 104 to invoke a connection for the receipt of e-mail information. Other e-mail accounts and information not associated with any wireless communication device are managed and stored on e-mail servers 102 as well. Other services may be provided for the wireless communication devices as well, such as telephone communications, Internet access, and other various data services.

Note that there are only three (3) computing devices 108 shown in FIG. 1 for simplicity, namely, computing devices 118, 120, and 122 which are labeled as PC1, PC2, ..., through PCn, respectively. Similarly, there are only three (3) e-mail servers 102 shown in the figure for simplicity, namely, e-mail servers 112, 114, and 116 which are labeled as e-mail server 1, 2, ..., n, respectively. Many additional e-mail servers, computing devices, and wireless communication devices can be utilized in actual practice.

In the embodiment described, computing devices 108 are computers such as desktop or laptop PCs which may be connected to e-mail servers 102 via the Internet using any conventional means (e.g. telephone dial-up, cable, or DSL modem). End-users of the PCs are able to access their appropriate personal e-mail accounts for sending and receiving new e-mail, as well as reviewing, sorting, organizing, and otherwise managing previously received e-mail stored at the e-mail server. When an end-user of a computing device accesses e-mail, the end-user's computing device is used to connect to the e-mail server via the Internet using the appropriate Uniform Resource Locator (URL) associated with the e-mail provider or server. Using the computing device, the end-user sends his/her personal user name and password to log on to this e-mail server. If this user name and password information matches that stored at the e-mail server, the login is successful and an e-mail session is created so that the end-user can perform e-mail tasks.

Note that the computing devices 108 and their respective e-mail accounts are generally unaffiliated with each other; that is, they are not (necessarily) associated together with the same business or private network. For example, computing devices 118 and 120 are not utilized by the same company nor are they part of the same private network; in fact, computing device 118 may be utilized by a private individual A and computing device 120 may be utilized by a private individual B. The e-mail accounts associated with computing devices 108 may therefore be referred to as unaffiliated e-mail accounts.

Preferably, each one of e-mail servers 102 has e-mail software configured in accordance with the Internet Message Access Protocol (IMAP) standard. IMAP is a recently developed e-mail protocol and it attempts to solve some problems associated with the earlier Post Office Protocol (POP). With IMAP, all e-mail is stored on an e-mail server and specific messages are viewed as requested by a client. Separate folders can be created on the e-mail server for organizing various e-mail messages. Advantageously, e-mail messages in the end-user's inbox and other mail folders can be accessed from several different physical devices or machines which run an IMAP client program. One standards specification for IMAP is Request For Comments (RFC) 2060, but other related specifications, additions, and/or revisions may be applicable.

The pushing of e-mail information from e-mail servers 102 to wireless communication devices 110 is facilitated through a plurality of e-mail managing clients 164 and a relay 160 which is coupled to a plurality of wireless communication networks 110. Wireless networks 110 may be, for example, cellular telecommunication networks. There are only three (3) wireless communication networks 110 shown in the figure for simplicity, namely, wireless networks 130, 132, and 134 which are labeled as wireless networks 1, 2, ..., n, respectively. Similarly, there are only three (3) e-mail managing clients 164 shown in the figure for simplicity, namely, e-mail managing clients 166,168, and 170 which are labeled as e-mail managing clients 1, 2, ..., n, respectively. Many additional e-mail managing clients and wireless networks can be utilized in actual practice.

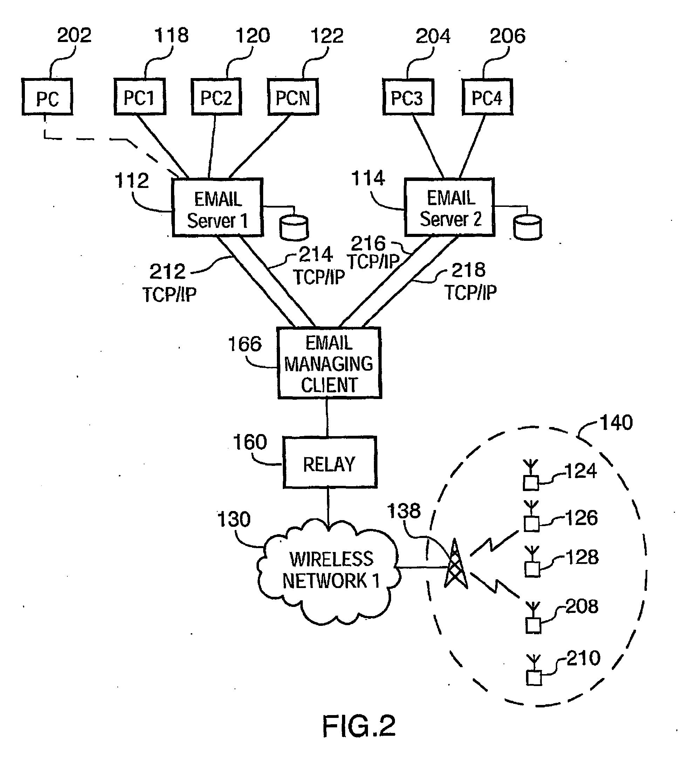

Referring now to FIG. 2, an illustration of a simplified relevant portion of the system of FIG. 1 is shown for describing further details of the present invention. FIG. 2 only shows e-mail servers 112 and 114, e-mail managing client 166, relay 160, wireless network 130, computing devices 118, 120, and 122 and wireless communication devices 124, 126, and 128 from FIG. 1, as well as additional devices which include computing devices 202, 204, and 206 and wireless communication devices 208 and 210. Computing devices 118,120, and 122 are shown to be associated and/or connected with e-mail server 112, whereas computing devices 204 and 206 are shown to be associated and/or connected with e-mail server 114. Although shown in a dashed line to be connected to e-mail server 112, computing device 202 may be connected to either of e-mail servers 112 or 114 or to a different e-mail server of a private or public network. E-mail servers 112 and 114 are shown associated and/or connected to e-mail managing client 166.

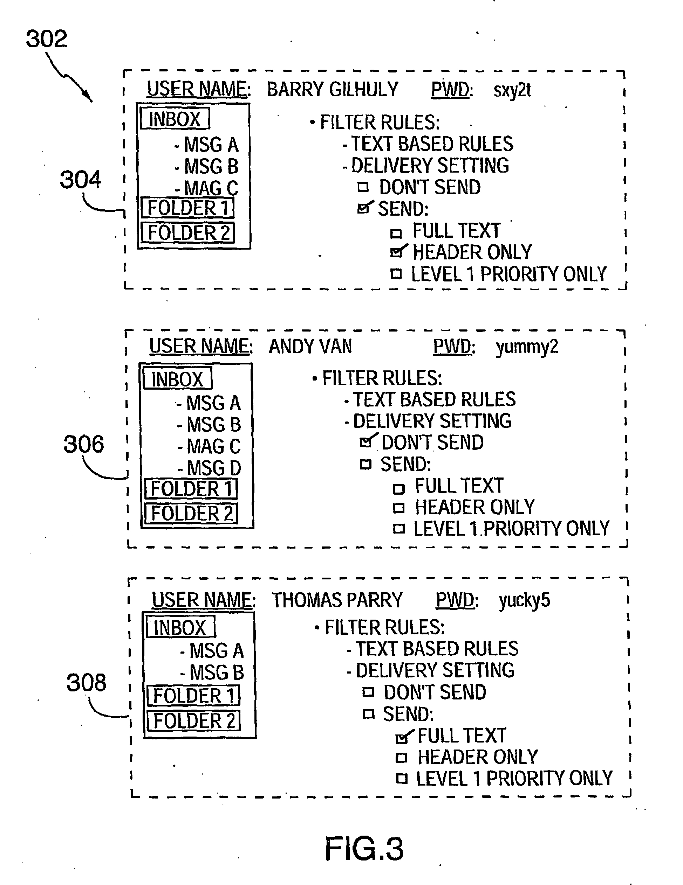

FIG. 3 shows general representative information of some of the plurality of unaffiliated e-mail accounts 302 which are stored and managed by each e-mail server 102 of FIGs. 1-2. In FIG. 3, there are only three (3) sets of e-mail account information shown for simplicity, namely, information relating to an e-mail account 304 in the name of "Barry Gilhuly"; information relating to an e-mail account 306 in the name of "Andy Van"; and information relating to an e-mail account 308 in the name of "Thomas Parry". As illustrated, each account has a user name and password associated therewith for security purposes. The information also includes the e-mail messages themselves, which are organized in folders such as an "Inbox" and various others including "Folder1" and "Folder 2".

Each e-mail account also has e-mail rule settings (or filter settings) associated therewith. The rule settings include conventional text-based filter settings as well as wireless communication device delivery settings. When a new e-mail message is received, the text-based filter settings are used by the e-mail server to, for example, route and store the new e-mail message into a specified folder based on specified text within a specified data field. On the other hand, the wireless communication device delivery settings are provided to specify whether and/or what e-mail information should be delivered to the wireless communication device associated with the e-mail account.

In the present example of FIG. 3, the delivery settings are indicative of whether or not to deliver the e-mail information to the wireless communication device and, if e-mail information is to be delivered, which portions of the e-mail information should be delivered. The e-mail information may include, but is not limited to, e-mail header information (data within TO, CC, FROM, and SUBJECT fields), e-mail delivery date and time, e-mail message text, and file attachments. Other suitable delivery settings may be specified, such as a Level 1 Priority setting which delivers e-mail information to the wireless communication device only when the e-mail message delivered is specified as Level 1 Priority by the sender. In the examples shown in FIG. 3, e-mail account 304 for "Barry Gilhuly" has a delivery setting of "ALWAYS SEND ONLY E-MAIL HEADER INFORMATION", e-mail account 306 for "Andy Van" has a delivery setting of "NEVER SEND E-MAIL", and e-maflaccount 308 for "Thomas Parry" has a delivery setting of "ALWAYS SEND FULL E-MAIL TEXT".

Preferably, the delivery settings may be changed by the end-user of a computing device (and/or wireless communication device) through an appropriate command or instruction, for example, when the computing device (and/or wireless communication device) is logged on to the e-mail server. Thus, the delivery settings are user configurable through the computing device and/or the wireless communication device.

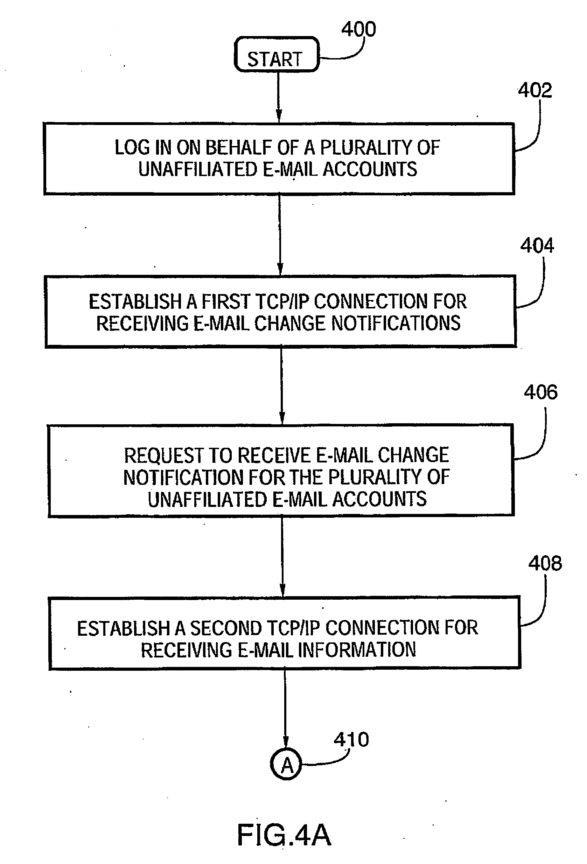

FIGs. 4A-4C form a flowchart which describes a method of pushing e-mail information from a plurality of e-mail servers to a plurality of wireless communication devices, in a system such as system 100 described in relation to FIGs. 1-3. The flowchart description begins with FIG. 4A, which relates to an e-mail notification setup method, which will be described in connection with FIG. 2. Beginning at a start block 400 of FIG. 4A, an e-mail managing client logs on to an e-mail server on behalf of a plurality of unaffiliated e-mail accounts (step 402). For example, in FIG. 2, e-mail managing client 166 may logon to e-mail server 112 on behalf of a plurality of unaffiliated e-mail accounts which include those accounts associated with computing devices 118, 120, and 122 (i.e., accounts 302 of FIG. 3).

In this step, the e-mail managing client may send a user name and password to log on to the e-mail server and, assuming that the user name and password matches that stored at the e-mail server, the login is successful and an e-mail session is created. For this e-mail session, the e-mail managing client has access rights (e.g. whether limited or full) for all of the plurality of unaffiliated e-mail accounts associated with wireless communication devices. The e-mail managing client's login session may be similar or the same as that of an administrative login session by an administrator who has access rights for a plurality of user accounts.

After the login, a connection is established between the e-mail managing client and the e-mail server for sending e-mail change notification information (step 404 of FIG. 4A). From FIG. 2, for example, a TCP/IP connection 212 may be established between e-mail managing client 166 and e-mail server 112. The e-mail managing client then requests to receive e-mail change notifications for the plurality of unaffiliated e-mail accounts that have an associated wireless communication device (step 406 of FIG. 4A). The e-mail server processes this request and a second connection is established between the e-mail managing client and the e-mail server for sending e-mail information (step 408 of FIG. 4A). For example, in FIG. 2, e-mail managing client 166 may send an e-mail change notification request to e-mail server 112 and, in response, a TCP/IP connection 214 may be established between e-mail managing client 166 and e-mail server 112 for sending e-mail information.

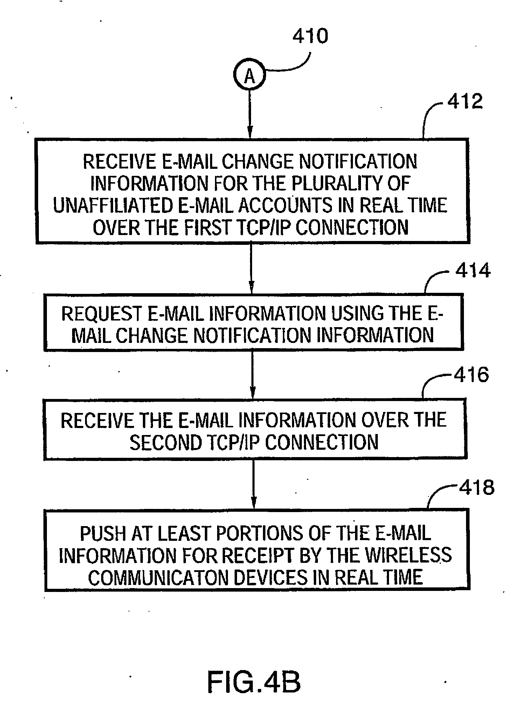

Thus, two TCP/IP connections 212 and 214 may be established between e-mail server 112 and e-mail managing client 166. E-mail server 112 uses TCP/IP connection 212 to continually send e-mail notification information to e-mail managing client 166 in real time, and uses TCP/IP connection 214 to send particular e-mail information to e-mail managing client 166 upon request. Similarly, two TCP/IP connections 216 and 218 may be established between e-mail server 114 and e-mail managing client 166; e-mail server 114 uses TCP/IP connection 216 to continually send e-mail notification information to e-mail managing client 166 in real time, and uses TCP/IP connection 218 to send particular e-mail information to e-mail managing client 166 upon request. The e-mail notification setup is complete, and the flowchart of FIG. 4A continues on to FIG. 4B through a connector 410.

Referring now to FIG. 4B, e-mail change notification information for any e-mail change on any of the e-mail accounts are received in real time by the e-mail managing client from the e-mail server over one of the connections (step 412). For example, in FIG. 2, e-mail change notification information for e-mail changes may be sent by e-mail server 112 and received by e-mail managing client 166 over TCP/IP connection 212. Preferably, each notification message from an e-mail server includes a server identifier that identifies the particular e-mail server (e.g. a server address) and an e-mail change notification identifier for the unique notification/e-mail change (e.g. a sequence number).

To further illustrate step 412 with reference to FIG. 2, computing device 202 may be used to draft and send an e-mail message (hereinafter the "first e-mail message") intended for the end-user of computing device 118 associated with wireless communication device 124 (FIG. 2), and this e-mail message is delivered to the appropriate e-mail account managed by e-mail server 112. An e-mail change notification flag for the newly received message is set within e-mail server 112 for the e-mail account and, soon thereafter, e-mail change notification information for the message is sent to e-mail managing client 166 over TCP/IP connection 212. The notification information includes the server identifier for e-mail server 112 (e.g. "serverl.net") and an e-mail change notification identifier or sequence number (e.g. "212").

More detailed information may be included in each notification message as well, such as that outlined in the Table 1 below:

**Table 1. Types of data which may be included in the e-mail change notification information**

| DATA TYPE | EXEMPLARY DATA |
|---|---|
| Sequence Number | 234 |
| Server Name | mds99.blackberry.net |
| Timestamp in time_t Format | 969929449 |
| Folder Name | user.sitename-usemame |
| User ID | Username |
| Message UID | 5 |
| Folder ID | 959529449 |

Continuing with the flowchart of FIG. 4B, the e-mail managing client requests e-mail information from the e-mail server over the second connection using the received e-mail change notification information (step 414 of FIG. 4B). For example, in FIG. 2, e-mail managing client 166 may request from e-mail server 112 that e-mail information associated with the first e-mail message by using the server identifier ("server1.net") as a destination address and using the notification identifier ("212") to identify the e-mail notification and desired e-mail information. E-mail server 112 receives and processes these commands (the appropriate server retrieving the proper e-mail information associated with the notification identifier), and passes the e-mail information to e-mail managing client 166 over the second connection. In response, the e-mail managing client receives this e-mail information over the second TCP/IP connection (step 416 of FIG. 4B). For example, in FIG. 2, e-mail managing client 166 may receive e-mail information over TCP/IP connection 214 associated with the first e-mail message. The obtaining of e-mail information in steps 414 and 416 may be performed by e-mail managing client 166 issuing conventional commands, such as SELECT (e.g. selecting a particular e-mail folder) and FETCH (e.g. fetching particular e-mail- data) commands, to e-mail server 112.

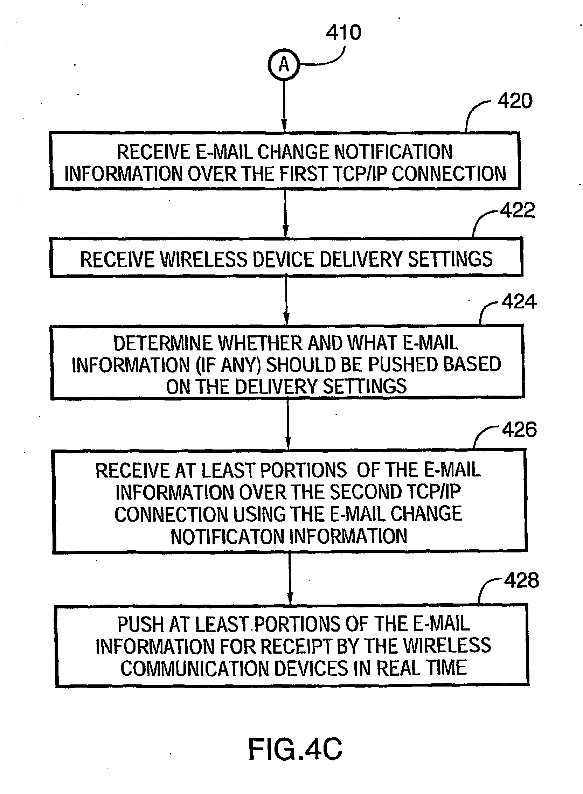

Once this information is received by the e-mail managing client, at least portions of the information are assembled in a message and pushed to the appropriate wireless communication device in real time (step 416 of FIG. 4). For example, in FIG. 2, e-mail information of the first e-mail message is pushed by e-mail managing client 166 to wireless communication device 124. The e-mail information is conveyed through relay 160 to the appropriate wireless network 130 in which the communication device is located. The flowchart ends at step 418, but the method continually repeats beginning again at step 412.

Note that the steps described in relation to FIG. 4B are not only performed in connection with a single e-mail server, but are simultaneously performed in connection with a plurality of different e-mail servers, each of which manage a plurality of unaffiliated e-mail accounts. To illustrate, computing device 202 of FIG. 2 may also be used to draft and send an e-mail message (hereinafter the "second e-mail message") for the end-user of computing device 120 having wireless communication device 126. In addition, computing device 202 may be used to draft and send an e-mail message (hereinafter the "third e-mail message") for the end-user of computing device 204 associated with wireless communication device 208. These second and third e-mail messages are delivered to the appropriate e-mail account managed by e-mail server 112 and e-mail server 114, respectively. Thus, e-mail change notification flags for these newly received messages are set within e-mail servers 112 and 114, respectively, for each e-mail account.

Thus, for step 412 of FIG. 4B, e-mail change notification information associated with the first e-mail message is not only sent to and received by e-mail managing client 166 over TCP/IP connection 212; notification information associated with the second e-mail message is also sent to and received by e-mail managing client 166 over TCP/IP connection 212. The received notification information for this second e-mail message includes the server identifier for e-mail server 112 (e.g. "server1.net") and an e-mail change notification identifier or sequence number (e.g. "245"). In addition, e-mail change notification information associated with the third e-mail message is sent to e-.mail managing client 166 over TCP/IP connection 216. The received notification information for the third e-mail message includes the server identifier for e-mail server 114 (e.g. "servex2.net") and an e-mail change notification identifier or sequence number (e.g. "099").

Also, for step 414 of FIG. 4B, e-mail managing client 166 not only requests from e-mail server 112 that e-mail information associated with the first e-mail message, but also requests that e-mail information associated with the second e-mail message by using the server identifier ("server1.net") as a destination address and using the notification identifier ("245") to specify the e-mail notification and information. Further, e-mail managing client 166 requests from e-mail server 114 that e-mail information associated with the third e-mail message by using the server identifier ("server2.net") as a destination address and using the notification identifier ("099") to specify the e-mail notification and information. For step 416 of FIG. 4B, e-mail managing client 166 receives e-mail information over TCP/IP connection 214 for not only the first e-mail message, but also for the second e-mail message. Additionally, e-mail managing client 166 receives e-mail information over TCP/IP connection 218 for the third e-mail message. For step 418 of FIG. 4B, not only is e-mail information of the first e-mail message assembled and pushed to wireless communication device 124, but e-mail information of the second e-mail message is pushed to wireless communication device 126 and e-mail information of the third e-mail message is pushed to wireless communication device 208.

Although the above-method was described in relation to the receipt of a new e-mail message, it may be performed for essentially any change to an end-user's mailbox. For example, the e-mail change may be the deletion of an existing message, or the movement of an existing message from one mail folder to a different mail folder. The resulting action will depend on the particular e-mail change that was made; e.g. the resulting action may be an update of existing internal maps as opposed to an e-mail message being pushed.

Preferably, the delivery of e-mail information is also performed based on the wireless communication device delivery settings associated with each e-mail account (e.g. delivery settings described in relation to the e-mail accounts of FIG. 3). This aspect will be described in relation to the portion of the flowchart of FIG. 4C, which continues after the completion of the e-mail notification setup from the flowchart of FIG. 4A. Referring now to FIG. 4C, e-mail change notification information for e-mail changes to any of the e-mail accounts is continually received in real time by the e-mail managing client from the e-mail server over one of the TCP/IP Connections (step 420 of FIG. 4C). Each notification message from the e-mail server includes a server identifier which identifies the particular e-mail server (e.g. a server address) and an e-mail change notification identifier for the unique notification/e-mail change (e.g. a sequence number).

Next, the e-mail managing client requests and receives the wireless delivery settings associated with the e-mail account from the e-mail server over the second connection (step 422 of FIG. 4C). In particular, the obtaining of delivery settings in step 422 may be performed by issuing conventional commands, such as SELECT (e.g. selecting a particular e-mail folder) and FETCH (e.g. fetching the delivery settings data) commands, to the e-mail server. For example, the delivery setting may be one of those described in relation to the e-mail accounts in FIG. 3.

A delivery setting is indicative of whether or not the e-mail information should be delivered to the wireless communication device and, if e-mail information is to be delivered, which portions of the e-mail information should be delivered. The e,mail information may include, but is not limited to, e-mail header information (data within TO, CC, FROM, and SUBJECT fields), e-mail delivery date and time, e-mail message text, and file attachments. Other suitable delivery settings may be specified, such as a Level 1 Priority setting which delivers e-mail information to the wireless communication device only when the e-mail message delivered is specified as Level 1 Priority. In the examples shown in FIG. 3, e-mail account 304 for "Barry Gilhuly" has a delivery setting of "ALWAYS SEND ONLY E-MA1L HEADER INFORMATION", e-mail account 306 for "Andy Van" has a delivery setting of "NEVER SEND E-MAIL", and e-mail account 308 for "Thomas Parry" has a delivery setting of "ALWAYS SEND FULL E-MAIL TEXT"'. Preferably, the delivery settings may be changed by the end-user of a computing device (and/or wireless communication device) through an appropriate command or instruction, for example, when the computing device (and/or wireless communication device) is appropriately logged on to the e-mail server. Thus, the delivery settings are user configurable through the computing device and/or the wireless communication device.

Referring back to FIG. 4C, the e-mail managing client determines whether and/or what e-mail information is to be pushed to a wireless communication device based on the retrieved delivery settings (step 424 of FIG. 4C). If the e-mail managing client determines that no e-mail information is to be pushed for this notification (e.g. setting which indicates NEVER SEND E-MAIL), then no request for e-mail information is made. On the other hand, the e-mail managing client may determine that e-mail information is to be pushed for this notification (e.g. setting which indicates SEND E-MAIL). In this case, the e-mail managing client requests and receives e-mail information from the appropriate e-mail server using the e-mail change notification information that is has received (step 426 of FIG. 4C).

More particularly in step 426, the e-mail managing client requests from the appropriate e-mail server that e-mail information associated with the e-mail message with use of the server identifier as a destination address and the notification identifier to specify the appropriate e-mail notification and information. The e-mail server receives and processes this message, retrieving the proper e-mail information associated with the notification identifier from the appropriate server, and thereafter sends the e-mail information to the e-mail managing client over the second TCP/IP connection. In response, the e-mail managing client receives this e-mail information over the second TCP/IP connection. In particular, the obtaining of this e-mail information may be performed by issuing conventional commands, such as SELECT (e.g. selecting a particular e-mail folder) and FETCH (e.g. fetching particular e-mail data) commands, to the e-mail server. The e-mail managing client then assembles the appropriate information into a message and pushes the message to the wireless device (step 428 of FIG. 4C). The information is pushed through relay 160 and the appropriate wireless network 130 in which the communication device is located.

Elaborating on the example described earlier in relation to FIG. 4B, e-mail managing client 166 of FIG. 2 receives the first notification message for the first e-mail message which includes the server address for e-mail server 112 ("server1 .net") and a sequence number of "212" which uniquely identifies the e-mail notification, which are associated e-mail account 304 of FIG. 3. Also retrieved is a delivery setting of "ALWAYS SEND ONLY E-MAIL HEADER INFORMATION" associated with computing device 118 through e-mail account 304. In this case, e-mail managing client 166 sends a command to receive e-mail information using "server1.net" as a destination address and "212" as a notification identifier. Preferably, e-mail server 112 is configured to send all or most relevant e-mail information to e-mail managing client 166, so that e-mail managing client 166 may extract and push only a portion (e.g. the e-mail header) of the information to the wireless communication device. In an alternate embodiment, e-mail server 112 may be configured to send only that part of e-mail information as specified in the delivery setting, so that e-mail managing client 166 merely has to appropriately configure the information into a message and push it to the wireless device.

Continuing with the example, e-mail managing client 166 also receives the second notification message for the second e-mail message which includes the server address for e-mail server I i2 ("server1.net") and a sequence number of "245" which uniquely identifies the particular e-mail notification for e-mail account 306 of FIG. 3. Also retrieved is a delivery setting of "NEVER SEND E-MAIL" associated with computing device 118 for e-mail account 306 of FIG. 3. When e-mail managing client 166 receives this particular delivery setting, it does not issue any command to receive e-mail information for notification identifier "245" and does not push any information associated with this notification.

Finally, e-mail managing client 166 receives the third notification message for the third e-mail message which includes the server address for e-mail server 112 ("server2.net") and a sequence number of "099" which uniquely identifies this particular e-mail notification for e-mail account 306 of FIG. 3. Also retrieved is a delivery setting of "ALWAYS SEND FULL E-MAIL TEXT" associated with computing device 118 for e-mail account 306. In this case, e-mail server 112 sends the e-mail information to e-mail managing client 166 which configures the information into a message which is pushed to the wireless communication device.

If a delivery setting of "SEND ONLY LEVEL-1 PRIORITY E-MAIL" (see FIG. 3) is used for the e-mail account and received by e-mail managing client 166, e-mail managing client 166 issues a command to receive e-mail information corresponding to the notification identifier, receives the e-mail information, and tests whether or not the e-mail message information indicates a level-1 priority. If the e-mail message information indicates a level-1 priority, then e-mail managing client 166 pushes the appropriate e-mail information to the wireless communication device. If the e-mail message information indicates something less than a level-1 priority, then e-mail managing client 166 does not push any e-mail information to the wireless communication device.

Thus, a method of pushing e-mail information from an e-mail server to a plurality of wireless communication devices has been described. In one exemplary method, the e-mail server is publicly accessible and manages a plurality of unaffiliated e-mail accounts respectively associated with the plurality of wireless communication devices. The method is performed by an e-mail managing client and comprises the acts of establishing and maintaining a connection with the e-mail server; receiving, over the connection, e-mail change notifications for the plurality of unaffiliated e-mail accounts; receiving e-mail information associated with the e-mail change notifications; and pushing at least portions of the e-mail information for receipt by the plurality of wireless communication devices. Preferably, the method makes use of the Internet Message Access Protocol (MAP) standard and the connection is a single TCP/IP connection. The method may also advantageously include the additional acts of receiving user-configurable delivery settings associated with the e-mail notifications; and determining whether and/or what e-mail information should be pushed based on the user-configurable delivery settings.

Another exemplary method involves pushing e-mail information from a plurality of e-mail servers to a plurality of wireless communication devices. This method is performed by an e-mail managing client and comprises the acts of, for each e-mail server: logging on to an e-mail server on behalf of a plurality of unaffiliated e-mail accounts and establishing and maintaining a connection therewith; receiving, over the connection, e-mail change notifications for the plurality of unaffiliated e-mail accounts, each e-mail change notification comprising an e-mail server identifier and an e-mail notification identifier, receiving e-mail information associated with the e-mail change notifications; and pushing at least portions of the e-mail information for receipt by the plurality of wireless communication devices substantially in real time. Preferably, this method makes use of the IMAP standard and the connection is a single TCP/IP connection. The method may also advantageously include the additional acts of receiving user-configurable delivery settings associated with the e-mail notifications; and determining whether and/or what e-mail information should be pushed based on the user-configurable delivery settings.

It is to be understood that the above is merely a description of preferred embodiments of the invention and that various changes, alterations, and variations may be made without departing from the scope of the invention as set for in the appended claims. For example, the method may be used for essentially any change to an end-user's mailbox; the e-mail change may be the deletion of an existing message or the movement of an existing message from one mail folder to a different mail folder. None of the terms or phrases in the specification and claims has been given any special particular meaning different from the plain language meaning to those skilled in the art, and therefore the specification is not to be used to define terms in an unduly narrow sense.

## Claims

1. A method of pushing e-mail information from an e-mail server (112) to a plurality of wireless communication devices (104), the e-mail server (112) adapted to manage a plurality of e-mail accounts respectively associated with the plurality of wireless communication devices (104), the method being performed by an e-mail managing client (166) and comprising the acts of:
establishing and maintaining a connection (212) with the e-mail server (112);
for each one of a plurality of e-mail accounts respectively associated with the plurality of wireless communication devices (104):
receiving, over the connection (212), an e-mail change notification for an e-mail account associated with one of the wireless communication devices (104) and user-configurable delivery settings associated with the same;
determining, based on the user-configurable delivery settings, whether e-mail information corresponding to the e-mail change notification should be pushed to the wireless communication device (104) associated with the e-mail account;
if the e-mail information should be pushed as determined based on the user-configurable delivery settings:
requesting e-mail information from the e-mail server; and
pushing at least a portion of the e-mail information for receipt by the wireless communication device (104) associated with the e-mail account.

2. The method of claim 1, further comprising:
determining, based on the user-configurable delivery settings, the portion of the e-mail information to be pushed to the wireless communication device (104) associated with the e-mail account.

3. The method of claim 1, wherein the user-configurable delivery settings are indicative of whether or not the e-mail information should be pushed to the wireless communication (104) associated with the e-mail account.

4. The method of claim 1, wherein the user-configurable delivery settings comprises a header only setting for pushing only e-mail header information to the wireless communication device (104) associated with the e-mail account.

5. The method of claim 1, wherein the user-configurable delivery settings comprise a Level 1 Priority setting for pushing e-mail information to the wireless communication device (104) associated with the e-mail account only when it is specified as Level 1 Priority.

6. The method of claim 1, wherein the e-mail server (112) comprises an Internet Message Access Protocol, IMAP, server.

7. The method of claim 1, which is performed by the e-mail managing client (166) for each one of a plurality of e-mail servers.

8. The method of claim 1, wherein the act of pushing comprises pushing via a relay to a wireless communication network within which the wireless communication device (104) associated with the e-mail account operates.

9. A computer program product comprising a computer readable medium on which computer instructions are stored, which when executed by an e-mail managing client (166), makes the e-mail managing client (166) perform the method of claim 1.

10. A system for pushing e-mail information to a plurality of wireless communication devices (104), comprising:
an e-mail server (102);
the e-mail server (102) being configured to manage a plurality of e-mail accounts which are respectively associated with the plurality of wireless communication devices (104);
an e-mail managing client (166);
the e-mail managing client (166) being configured to establish and maintain a connection (212) with the e-mail server (102);
the e-mail server (102) being configured to send e-mail change notification information and user-configurable delivery settings for each one of the plurality of e-mail accounts respectively associated with one of the plurality of wireless communication devices (104) over the connection (212) and the e-mail managing client (166) being configured to receive the same;
the e-mail managing client (166) being configured to determine, based on the user-configurable delivery settings, whether e-mail information corresponding to the e-mail change notification information should be pushed to the wireless communication device (104) associated with the e-mail account and, if the e-mail information should be pushed as determined based on the user-configurable delivery settings: request e-mail information from the e-mail server and push at least a portion of the e-mail information for receipt by the wireless communication device (104) associated with the e-mail account.

11. The system of claim 10, wherein the e-mail managing client (166) is further configured to determine, based on the user-configurable delivery settings, the portion of the e-mail information to be pushed to the wireless communication device (104) associated with the e-mail account.

12. The system of claim 10, wherein the user-configurable delivery settings are indicative of whether or not the e-mail information should be pushed to the wireless communication (104) associated with the e-mail account.

13. The system of claim 10, wherein the user-configurable delivery settings comprises a header only setting for pushing only e-mail header information to the wireless communication device (104) associated with the e-mail account.

14. The system of claim 10, wherein the user-configurable delivery settings comprise a Level 1 Priority setting for pushing e-mail information to the wireless communication device (104) associated with the e-mail account only when it is specified as Level 1 Priority.

15. The system of claim 10, wherein the e-mail server (112) comprises an Internet Message Access Protocol, IMAP, server.

## Patentansprüche

1. Verfahren zum Verschieben einer E-Mail-lnformation von einem E-Mail-Server (112) zu einer Vielzahl von drahtlosen Kommunikationsvorrichtungen (104), wobei der E-Mail-Server (112) ausgebildet ist, eine Vielzahl von E-Mail-Konten zu verwalten, die zu der Vielzahl von drahtlosen Kommunikationsvorrichtungen (104) gehören, wobei das Verfahren durch einen E-Mail-Verwaltungs-Client (166) durchgeführt wird und die Vorgänge aufweist:
Aufbauen und Unterhalten einer Verbindung (212) mit dem E-Mail-Server (112);
für jedes einer Vielzahl von E-Mail-Konten, die zu der Vielzahl von drahtlosen Kommunikationsvorrichtungen (104) gehören:
Empfangen, über die Verbindung (212), einer E-Mail-Änderungs-Benachrichtigung für ein E-Mail-Konto, das zu einer der drahtlosen Kommunikationsvozzichtungen (104) gehört, und Benutzer-konfigurierbarer Liefer-Einstellungen, die zu selbigen gehören;
Bestimmen, basierend auf den Benutzer-konfigurierbaren Liefer-Einstellungen, ob eine E-Mail-Information, die der E-Mail-Änderungs-Benachrichtigung entspricht, an die drahtlose Kommunikationsvornchtung (104) verschoben werden soll, die zu dem E-Mail-Konto gehört;
wenn die E-Mail-Information verschoben werden soll, wie basierend auf den Benutzer-konfigurierbaren Liefer-Einstellungen bestimmt:
Anfordern einer E-Mail-Information von dem E-Mail-Server; und
Verschieben zumindest eines Teils der E-Mail-Inforrration zum Empfang durch die drahtlose Kommunikationsvorrichtung (104), die zu dem E-Mail-Konto gehört.

2. Verfahren gemäß Anspruch 1, das weiter aufweist:
Bestimmen, basierend auf den Benutzer-konfigurierbaren Liefer-Einstellungen, des Teils der der E-Mail-Inforrration, der an die drahtlose Kommunikationsvorrichtung (104) verschoben werden soll, die zu dem E-Mail-Konto gehört.

3. Verfahren gemäß Anspruch 1, wobei die Benutzer-konfigurierbaren Liefer-Einstellungen anzeigen, ob die E-Mail-Information an die drahtlose Kommunikation (104), die zu dem E-Mail-Konto gehört, verschoben werden soll oder nicht.

4. Verfahren gemäß Anspruch 1, wobei die Benutzer-konfigurierbaren Liefer-Einstellungen eine nur-Header-Einstellung zum Verschieben nur einer E-Mail-Header-Information an die drahtlose Kommunikationsvorrichtung (104), die zu dem E-Mail-Konto gehört, aufweisen.

5. Verfahren gemäß Anspruch 1, wobei die Benutzer-konfigurierbaren Liefer-Einstellungen eine Ebene-1-Priorität aufweisen zum Verschieben einer E-Mail-Information an die drahtlose Kommunikationsvorrichtung (104), die zu dem E-Mail-Konto gehört, nur, wenn sie als Ebene-1-Priorität spezifiziert ist.

6. Verfahren gemäß Anspruch 1, wobei der E-Mail-Server (112) einen Internet-Nachricht-Zugriff-Protokoll, IMAP,-Server aufweist.

7. Verfahren gemäß Anspruch 1, das durch den E-Mail-Verwaltungs-Client (166) für jeden einer Vielzahl von E-Mail-Servern durchgeführt wird.

8. Verfahren gemäß Anspruch 1, wobei der Vorgang des Verschiebens ein Verschieben über ein Relais zu einem drahtlosen Kommunikationsnetzwerk aufweist, mit dem die drahtlose Kommunikationsvorrichtung (104), die zu dem E-Mail-Konto gehört, arbeitet.

9. Computerprogrammprodukt, das ein Computer-lesbares Medium aufweist, auf dem Computeranweisungen gespeichert sind, die bei Ausführung durch einen E-Mail-Verwaltungs-Client (166) veranlassen, dass der E-Mail-Verwaltungs-Client (166) das Verfahren von Anspruch 1 durchführt.

10. System zum Verschieben einer E-Mail-Information an eine Vielzahl von drahtlosen Kommunikationsvornchtungen (104), das aufweist:
einen E-Mail-Server (102);
wobei der E-Mail-Server (102) konfiguriert ist, eine Vielzahl von E-Mail-Konten zu verwalten, die zu der Vielzahl von drahtlosen Kommunikationsvorrichtungen (104) gehören;
ein E-Mail-Verwaltungs-Client (166);
wobei der E-Mail-Verwaltungs-Client (166) konfiguriert ist, eine Verbindung (212) mit dem E-Mail-Server (102) aufzubauen und zu unterhalten;
wobei der E-Mail-Server (102) konfiguriert ist, eine E-Mail-Änderungs-Benachrichtigungs-Information und Benutzer-konfigurierbare Liefer-Einstellungen für jedes der Vielzahl von E-Mail-Koziten, das zu einer der Vielzahl von drahtlosen Kommunikationsvorrichtungen (104) gehört, über die Verbindung (212) zu senden, und der E-Mail-Verwaltungs-Client (166) konfiguriert ist, diese zu empfangen;
wobei der E-Mail-Verwaltungs-Client (166) konfiguriert ist, zu bestimmen, basierend auf den Benutzer-konfigurierbaren Liefer-Einstellungen, ob eine E-Mail-Infonnation, die der E-Mail-Änderungs-Benachrichtigungs-Information entspricht, an die drahtlose ICommunikationsvorrichtung (104) verschoben werden soll, die zu dem E-Mail-IConto gehört, und wenn die E-Mail-Information verschoben werden soll, wie bestimmt basierend auf den Benutzer-konfigunierbaren Liefer-Einstellungen: Anfordern einer E-Mail-Information von dem E-Mail-Server und Verschieben zumindest eines Teils der E-Mail-Information zum Empfang durch die drahtlose Kommunikationsvorrichtung (104), die zu dem E-Mail-Konto gehört.

11. Das System gemäß Anspruch 10, wobei der E-Mail-Vexwaltungs-Client (166) weiter konfiguriert ist, zu bestimmen, basierend auf den Benutzer-konfigurierbaren Liefer-Einstellungen, den Teil der E-Mail-Information, der an die drahtlose Kommunikationsvorrichtung (104) verschoben werden soll, die zu dem E-Mail-Konto gehört.

12. Das System gemäß Anspruch 10, wobei die Benutzer-konfigurierbaren Liefer-Einstellungen anzeigen, ob die E-Mail-Information an die drahtlose Kommunikation (104), die zu dem E-Mail-Konto gehört, verschoben werden soll oder nicht.

13. Das System gemäß Anspruch 10, wobei die Benutzer-konfigurierbaren Liefer-Einstellungen eine nw-Header-Einstellung zum Verschieben nur einer E-Mail-Header-Information an die drahtlose Kommunikationsvorrichtung (104), die zu dem E-Mail-Konto gehört, aufweisen.

14. Das System gemäß Anspruch 10, wobei die Benutzer-konfigurierbaren Liefer-Einstellungen eine Ebene-1-Priorität aufweisen zum Verschieben einer E-Mail-Information an die drahtlose Kommunikationsvorrichtung (104), die zu dem E-Mail-Konto gehört, nur, wenn sie als Ebene-1-Priorität spezifiziert ist.

15. Das System gemäß Anspruch 10, wobei der E-Mail-Server (112) einen Internet-Nachricht-Zugriff-Protokoll, IMAP, -Server aufweist.

## Revendications

1. Procédé de distribution d'information de courrier électronique par un serveur (112) de courrier électronique à une pluralité de dispositifs (104) de communication sans fil, le serveur (112) de courrier électronique étant apte à gérer une pluralité de comptes de courrier électronique associés respectivement à la pluralité de dispositifs (104) de communication sans fil, le procédé étant mis en oeuvre par un client (166) gérant du courrier électronique et comprenant les actions consistant :
à établir et entretenir une connexion (212) avec le serveur (112) de courrier électronique ;
pour chacun de la pluralité de comptes de courrier électronique associés respectivement à la pluralité de dispositifs (104) de communication sans fil :
à recevoir, sur la connexion (27.2), une notification de changement de courrier électronique pour un compte de courrier électronique associé à l'un des dispositifs (104) de communication sans fil et des paramétrages de délivrance configurable par l'utilisateur qui lui sont associés ;
à déterminer, en se basant sur les paramétrages de délivrance configurable par l'utilisateur, si l'information de courrier électronique correspondant à la notification de changement de courrier électronique doit être distribuée au dispositif (104) de communication sans fil associé au compte de courrier électronique ;
si, comme déterminé en se basant sur les paramétrages de délivrance configurable par l'utilisateur, l'information de courrier électronique doit être distribuée :
à demander l'information de courrier électronique au serveur de courrier électronique ; et
à distribuer au moins une partie de l'information de courrier électronique pour réception par le dispositif (104) de communication sans fil associé au compte de courrier électronique.

2. Procédé selon la revendication 1, comprenant en outre :
la détermination, en se basant sur les paramétrages de délivrance configurable par l'utilisateur, de la partie de l'information de courrier électronique à distribuer au dispositif (104) de communication sans fil associé au compte de courrier électronique.

3. Procédé selon la revendication 1, dans lequel les paramétrages de délivrance configurable par l'utilisateur sont représentatifs de ce que l'information de courrier électronique doit être distribuée, ou non, à la communication sans fil (7.04) associée au compte de courrier électronique.

4. procédé selon la revendication 1, dans lequel les paramètres de délivrance configurable par l'utilisateur comprennent le paramétrage seulement d'un en-tête pour distribuer seulement l'information d'en-tête de courrier électronique au dispositif (104) de communication sans fil associé au compte de courrier électronique.

5. Procédé selon la revendication 1, dans lequel les paramétrages de délivrance configurable par l'utilisateur comprennent un paramétrage de priorité de niveau 1 pour distribuer l'information de courrier électronique au dispositif (104) de communication sans fil associé au compte de courrier électronique seulement lorsqu'il est spécifié comme priorité de niveau 1.

6. Procédé selon la revendication 1, dans lequel le serveur (112) de courrier électronique comprend un serveur sous protocole d'accès aux messages sur Internet, IMAP (pour "Internet Message Access Protocol").

7. Procédé selon la revendication 1, qui est mis en oeuvre par le client (166) gérant du courrier électronique pour chacun d'une pluralité de serveurs de courrier électronique.

8. Procédé selon la revendication 1, dans lequel l'action consistant à distribuer comprend la distribution via un relais à un réseau de communication sans fil à l'intérieur duquel opère le dispositif (104) de communication sans fil associé au compte de courrier électronique,

9. Produit programme d'ordinateur comprenant un support lisible par ordinateur sur lequel sont mémorisées des instructions d'ordinateur, qui lorsqu'il est exécuté par un client (166) gérant du courrier électronique, fait que le client (166) gérant du courrier électronique met en oeuvre le procédé selon la revendication 1.

10. Système de distribution d'information de courrier électronique à une pluralité de dispositifs (104) de communication sans fil, comprenant :
un serveur (102) de courrier électronique ;
le serveur (102) de courrier électronique étant configuré pour gérer une pluralité de comptes de courrier électronique qui sont respectivement associés à la pluralité de dispositifs (104) de communication sans fil;
un client (166) gérant du courrier électronique ;
le client (166) gérant du courrier électronique étant configuré pour établir et entretenir une connexion (212) avec le serveur (102) de courrier électronique ;
le serveur (102) de courrier électronique étant configuré pour envoyer de l'information de notification de changement de courrier électronique et des paramétrages de délivrance configurable par l'utilisateur pour chacun de la pluralité de comptes de courrier électronique respectivement associés à l'un de la pluralité de dispositifs (104) de communication sans fil sur la connexion (212) et le client (166) gérant du courrier électronique étant configuré pour les recevoir ;
le client (166) gérant du courrier électronique étant configuré pour déterminer, en se basant sur les paramétrages de délivrance configurable par l'utilisateur, si de l'information de courrier électronique correspondant à l'information de notification de changement de courrier électronique doit être distribuée au dispositif (104) de communication sans fil associé au compte de courrier électronique et, si l'information de courrier électronique doit être distribuée comme déterminé sur la base des paramétrages de délivrance configurable par l'utilisateur : pour demander l'information de courrier électronique au serveur de courrier électronique et pour distribuer au moins une partie de l'information de courrier électronique pour réception par le dispositif (104) de communication sans fil associé au compte de courrier électronique.

11. Système selon la revendication 10, dans lequel le client (166) gérant du courrier électronique est en outre configuré pour déterminer, en se basant sur les paramétrages de délivrance configurable par l'utilisateur, la partie de l'information de courrier électronique qui est à distribuer au dispositif (104) de communication sans fil associé au compte de courrier électronique.

12. Système selon la revendication 10, dans lequel les paramétrages de délivrance configurable par l'utilisateur sont représentatifs de ce que l'information de courrier électronique doit être distribuée, ou non, à la communication sans fil (104) associée au compte de courrier électronique.

13. Système selon la revendication 10, dans lequel les paramètres de délivrance configurable par l'utilisateur comprennent le paramétrage seulement d'un en-tête pour distribuer seulement l'information d'en-tête de courrier électronique au dispositif (104) de communication sans fil associé au compte de courrier électronique.

14. Système selon la revendication 10, dans lequel les paramétrages de délivrance configurable par l'utilisateur comprennent un paramétrage de priorité de niveau 1 pour distribuer l'information de courrier électronique au dispositif (104) de communication sans fil associé au compte de courrier électronique seulement lorsqu'il est spécifié comme priorité de niveau 1.

15. Procédé selon la revendication 10, dans lequel le serveur (112) de courrier électronique comprend un serveur sous protocole d'accès aux messages sur Internet, IMAP.
